# NEUE EUROPÄISCHE PATENTSCHRIFT

(11) **EP 2 788 646 B2**
(45) Veröffentlichungstag und Bekanntmachung des Hinweises auf die Entscheidung über den Einspruch: **13.12.2023**
(45) Hinweis auf die Patenterteilung: 29.04.2020
(21) Anmeldenummer: 12809113.9
(22) Anmeldetag: 06.12.2012
(51) Int. Cl.: F16L 25/01, F24H 1/10, H05B 3/58, F01N 3/20, F16L 53/00, F24H 1/00, F16L 53/38

(54) **KONFEKTIONIERTE MEDIENLEITUNG UND VERFAHREN ZUM KONFEKTIONIEREN EINER MEDIENLEITUNG MIT INNENLIEGENDEN HEIZELEMENTEN**
ASSEMBLED MEDIA LINE AND METHOD FOR ASSEMBLING A MEDIA LINE COMPRISING INNER HEATING ELEMENTS
CONDUITE À FLUIDE CONFECTIONNÉE ET PROCÉDÉ DE CONFECTION D'UNE CONDUITE À FLUIDE POURVUE D'ÉLÉMENTS DE CHAUFFE INTERNES

(30) Priorität: 07.12.2011 DE 102011120356
(43) Veröffentlichungstag der Anmeldung: 15.10.2014
(73) Patentinhaber: Voss Automotive GmbH, 51688 Wipperfürth (DE)
(72) Erfinder: ETSCHEID, Tobias, 51789 Lindlar (DE); SCHWARZKOPF, Otfried, 51515 Kürten (DE); ISENBURG, Marco, 40885 Ratingen (DE)
(74) Vertreter: Rebbereh, Cornelia
(86) Internationale Anmeldenummer: PCT/EP2012/005030
(87) Internationale Veröffentlichungsnummer: WO 2013/083274

(56) Entgegenhaltungen:
- EP-A1- 1 985 908
- EP-A1- 2 006 593
- EP-A2- 1 070 642
- WO-A1-2007/073286
- WO-A1-2009/080501
- DE-U1-202007 010 502
- JP-A- 8 320 096
- JP-A- 2009 168 119
- US-A1- 2010 269 917

## Beschreibung

Die Erfindung betrifft eine konfektionierte Medienleitung mit einer Medienleitung mit innenliegenden Heizelementen und mit zumindest einem Leitungsverbinder sowie ein Verfahren zum Konfektionieren einer solchen Medienleitung mit innenliegenden Heizelementen.

Konfektionierte Medienleitungen mit in der Medienleitung liegenden Heizelementen sind im Stand der Technik bekannt. Beispielsweise offenbart die JP 2009-168119 eine Vorrichtung mit einem Rohr, durch das ein Heizdraht geführt ist und eine Heiz- und Warmhalteabdeckung für eine Rohrkupplung, an der diese Vorrichtung angebracht ist. Hierbei ist ein Steckkörpereinführabschnitt vorgesehen, der dazu dient, den Heizdraht in fluiddichtem Zustand nach außen herauszuziehen. Ein erster Abdeckabschnitt, der von dem Steckkörpereinführabschnitt aus dessen Rückseite abdeckt, und ein zweiter Abdeckabschnitt, der mit Ausnahme eines Verbindungsabschnitts einen zweiten Kupplungsabschnitt und den Fluiddurchlass der Heiz- und Warmhalteabdeckung abdeckt, sind einstückig ausgebildet, wobei zwischen dem ersten Abdeckabschnitt und dem zweiten Abdeckabschnitt eine Durchführung zum Durchführen des Heizdrahtes vorgesehen ist. Der aus dem Steckkörpereinführabschnitt herausgezogene Heizdraht wird zum ersten Abdeckabschnitt zurückgeführt. An dem zweiten Abdeckabschnitt ist ein Vorsprung vorgesehen, an dem der Heizdraht fixiert wird.

Aus der JP 2008-309296 ist ein Heiz- und Warmhalterohr bekannt, bei dem der Verbrauch an Heizdraht und die Gefahr eines Reißens des Heizleiters gering und die Wärmeübertragungseffizienz an ein Fluid hoch sein sollen. Der innerhalb des Heiz- und Warmhalterohres geführte Heizdraht wird nur durch einen der beiden Rohrkupplungskörper geführt. Zum Verbinden des Heizdrahtes mit einem Stromleiter dient ein sogenannter säulenförmiger Grundkörper im Inneren des Rohrkupplungskörpers. Ferner sind eine Abzugssicherung und eine Dichtung vorgesehen, die aus dem Grundkörper herausgezogen werden können, damit der Heizdraht durch eine Öffnung der Abzugssicherung und die Dichtung hindurchgeführt werden kann, bis die Spitze des Heizdrahtes aus der Fläche des Grundkörpers herausragt. Anschließend wird der Stromleiter durch die Abzugssicherung und die Dichtung hindurchgeführt und der Stromleiter und das eine Ende des Heizdrahtes miteinander verbunden.

In ähnlicher Weise offenbart auch die EP 2 040 510 B1 eine Einrichtung mit einer Leitung zum Erwärmen oder Warmhalten eines Fluids, bei der ebenfalls die Heizdrähte lediglich durch das Innere eines Leitungsverbinders hindurchgeführt sind. Der Durchtritt erfolgt zunächst durch einen mit jeweiligen Dichtelementen für die einzelnen Heizdrähte versehenen Zwischendrahtdurchlass sowie durch einen dahinter geschalteten Drahtdurchlass, der mit einer Zugentlastung für die Verbindungsstelle der Heizdrähte mit Stromleitern versehen ist.

Die EP 1 070 642 A2 offenbart eine Heizvorrichtung für Scheibenwaschanlagen von Fahrzeugen, bei der der Heizleiter sich frei im Lumen einer Leitung erstreckt und gegen die im Lumen der Leitung fließenden Strömungsmedien isoliert ist. Der Heizleiter ist durch Anschlusselemente auf dem Lumen der Leitung nach außen geführt und elektrisch angeschlossen. Ein Abdichtelement weist ein größeres Volumen auf als die kommunizierende Aufnahmeöffnung des Anschlusselements. Das Abdichtelement besteht aus einem elastisch verformbaren Material. An zumindest einem freien Ende des aus dem Lumen der Leitung nach außen geführten Heizleiters ist ein Kontaktelement angeordnet, das den Anschluss zur Stromversorgung des Fahrzeuges herstellt. Die EP 2 006 593 A1 offenbart eine Leitungsanordnung von Leitungen zum Beheizen oder zum Warmhalten eines Fluids, umfassend zumindest eine Leitung, durch die ein Fluid transportiert wird, wobei eine oder mehrere Heizleiter in diese Leitung eingefügt sind.

Es hat sich aus dem Stand der Technik gezeigt, dass die Heizleistung beim Führen beider Heizleiter über einen Leitungsverbinder, wie im vorstehend genannten Stand der Technik, zu hoch ist. Heizleiter werden üblicherweise im Hinblick auf die Litzenauswahl und Steigung etc. auf die betreffende Medienleitung und deren Leistungsbedarf angepasst. Ist die Litze bzw. sind die Litzen oder Heizelemente auf der Medienleitung und dem Leitungsverbinder identisch, ergibt sich die Leistungseinkopplung am Leitungsverbinder in Abhängigkeit von der Leitungslänge im besonderen Maße. Hierbei tritt insbesondere bei kurzen Leitungen das Problem auf, dass bei diesen häufig zu viel Leistung eingekoppelt wird, oder auch, wenn Heizwendel verwendet werden.

Ein Leitungsverbinder bietet für die Befestigung der Heizleiter nur wenig Variationsmöglichkeiten, da ein Umschlingen und eine Befestigung aus Kostengründen üblicherweise relativ gleichbleibend erfolgen, also die Verteilung der Heizleiter auf dem Leitungsverbinder, die Anzahl der Umschlingungen, die mindestens ein oder zwei beträgt, die Positionierung einer Crimpverbindung, die in einem den Leitungsverbinder umgebenden Gehäuse angeordnet wird. Auch eine mögliche Befestigungsstruktur, z.B. eine Rippenstruktur auf der Außenseite des Leitungsverbinders zum Befestigen der Heizleiter ist üblicherweise bei den meisten Leitungsverbindern gleich ausgebildet.

Der vorliegenden Erfindung liegt daher die Aufgabe zugrunde, eine konfektionierte Medienleitung mit einer Medienleitung mit innenliegenden Heizelementen und mit zumindest einem Leitungsverbinder sowie ein Verfahren zum Herstellen einer solchen dahingehend fortzubilden, dass eine optimale Heizleistung bezüglich des durch den zumindest einen Leitungsverbinder hindurchführten Mediums erzielt werden kann.

Die Aufgabe wird für eine konfektionierte Medienleitung nach Anspruch 4 gelöst. Für ein Verfahren zum Konfektionieren einer Medienleitung mit innenliegenden Heizelementen wird die Aufgabe dadurch gelöst, dass die Heizelemente in die Medienleitung eingezogen werden, die Medienleitung an einem Leitungsverbinder montiert wird, zumindest ein Dichtelement zum Abdichten der Heizelemente gegenüber dem Leitungsverbinder auf diese aufgeschoben und an dem Leitungsverbinder montiert wird, bei Vorsehen von gleich langen Heizelementen diese am Ende der Medienleitung so positioniert werden, dass jeweils eines der Heizelemente weiter aus der Medienleitung herausragt als das zumindest eine andere oder eines der Heizelemente mit einer größeren Länge abgelängt wird als das oder die andere(n), um einen Leitungsverbinder jeweils nur eines der Heizelemente auf der Außenseite zumindest teilweise herum gewunden oder angeordnet wird, und die Heizelemente offen gelassen oder elektrisch miteinander und/oder mit Kaltleitern und/oder mit einem Brückenelement und/oder Füllelement verbunden oder parallel geschaltet werden. Weiterbildungen der Erfindung sind in den abhängigen Ansprüchen definiert.

Dadurch wird eine konfektionierte Medienleitung geschaffen, bei der nur eines der zumindest zwei Heizelemente zum Beheizen eines Leitungsverbinders bzw. des dort hindurchgeführten Mediums verwendet wird. Unter Heizelementen werden vorliegend Heizleiter, Heizlitzen und Heizdrähte verstanden, wobei unter Heizleitern wärmeleitende Elemente, die einen Wärmeübergang in eine Schicht bewirken, verstanden werden. Sie umfassen Heizwendel, die ihrerseits eine Innenfaser und um diese herum gewendelte Drähte umfassen. Unter Heizlitzen sollen hier sowohl einzelne Heizdrähte als auch eine Anzahl von zusammengefassten Heizdrähten verstanden werden, wobei der jeweilige Heizdraht bzw. die Anzahl von zusammengefassten Heizdrähten mit oder ohne Isolierummantelung vorgesehen sein können. Unter Kaltleitern werden Leiter verstanden, die nicht zum Beheizen vorgesehen sind, sondern dem Anschluss der Heizleiter an eine Energieversorgung (Strom- oder Spannungsquelle) dienen. Üblicherweise weisen sie entsprechend einen geringeren Widerstand als die Heizleiter auf. Unter einem Füllelement wird vorliegend Litzenmaterial verstanden, das, sofern der Heizleiter für eine Crimpverbindung zu dünn ist, zum Auffüllen mit in diese Crimpverbindung eingefügt wird.

Beispielsweise bei einer Medienleitung mit einem inneren Durchmesser von 4 bis 6 mm und einer durch diese hindurch strömenden wässrigen Harnstofflösung bzw. AdBlue^{®} als Medium verringert sich die Heizleistung, die durch das eine Heizelement auf den Leitungsverbinder bzw. das durch diesen hindurchgeführte Medium in Form von AdBlue^{®} ausgeübt werden kann, deutlich, wobei beispielsweise durch ein Heizelement eine Heizleistung von 6 bis 7 W/m, somit eine Heizleistung bezogen auf den Leitungsverbinder von 0,6 W innen zuzüglich einer Heizleistung von 0,8 W außen erzielt werden kann.

Um die Möglichkeit zu haben, lediglich eines der beiden Heizelemente auf der Außenseite um den Leitungsverbinder zumindest teilweise herum zu winden bzw. zu wickeln, wird dieses Heizelement mit einer größeren Länge aus der Leitung herausgeführt als das zumindest eine andere Heizelement, das nicht zum zumindest teilweisen Umwickeln des Leitungsverbinders vorgesehen ist. Die Abschnitte der Heizelemente, die über die Endfläche des Leitungsverbinders vorstehen, weisen also eine unterschiedliche Länge auf. Es können dabei entweder zwei gleich lange Heizelemente vorgesehen sein, die versetzt zueinander in der Medienleitung angeordnet sind und entsprechend das eine Heizelement an dem einen Ende der Medienleitung weiter aus dieser herausragt und das andere an dem anderen Ende der Medienleitung. Oder es können unterschiedlich lang ausgebildete Heizelemente verwendet werden, die also eine unterschiedliche Länge aufweisen, so dass das längere der zumindest zwei Heizelemente zum Umwickeln beider Leitungsverbinder dient. In letzterem Fall kann die unterschiedliche Länge der Heizelemente durch entsprechendes Ablängen erzielt werden. Zumindest der über die Endfläche des Leitungsverbinders bei der Herstellung der beheizbaren Medienleitung bzw. dann, wenn man die Heizelemente wieder von dem Leitungsverbinder abwickeln würde, vorstehende Abschnitt weist also bei dem zum Umwickeln des Leitungsverbinders vorgesehenen Heizelement eine größere Länge auf als der entsprechende Abschnitt des anderen Heizelements. Das weiter über eine Endfläche des Leitungsverbinders vorstehende Heizelement wird zum Umwickeln des oder Anordnen auf dem Leitungsverbinder und zum Beheizen vorgesehen, ist also das einzige zum Beheizen des Leitungsverbinders vorgesehene Heizelement.

Insbesondere kann der zum Beheizen des Leitungsverbinders vorgesehene Heizelementabschnitt etwa doppelt so lang wie der entsprechende Abschnitt des anderen Heizelements sein. Die Längendifferenz Δl zwischen den beiden Heizelementen kann beispielsweise 100 bis 150 mm, insbesondere 120 mm betragen. Diese Längendifferenz entspricht der auf der Außenseite des Leitungsverbinders benötigten Heizelementlänge bzw. der wirksamen Heizelementlänge pro Umwicklung. Hierdurch kann ein auf der Außenseite des Leitungsverbinders bestehender Leistungsbedarf von 0,6 bis 1 W, insbesondere 0,8 W, gedeckt werden. Im Inneren des Leitungsverbinders besteht ein Heizleistungsbedarf von 0,4 bis 0,8 W, insbesondere 0,6 W. Insgesamt ergibt sich somit ein Heizleistungsbedarf von 1 bis 1,8 W, insbesondere 1,4 W. Bei Vorsehen unterschiedlicher Heizelemente auf der Innen- und der Außenseite des Leitungsverbinders sind andere Werte möglich. Die Heizelementlänge im Inneren des Leitungsverbinders beträgt bei einer maximalen Heizleistung von 1,8 W beispielsweise 20 bis 60 mm, insbesondere 40 mm pro Heizelement bzw. zweimal die Länge des Leitungsverbinders. Das Längenverhältnis der Heizelemente beträgt insbesondere 2 x 40 mm zu 120 mm, also 2 : 3. Das Verhältnis des Heizleistungsbedarfs im Innern des Leitungsverbinders zu dem Heizleistungsbedarf auf der Außenseite des Leitungsverbinders beträgt beispielsweise 0,65 bis 0,8, insbesondere 0,75.

Bei der Medienleitung mit den innenliegenden Heizelementen kann in dem Abschnitt zwischen den beiden Leitungsverbindern ein Leistungsbedarf im Inneren der Medienleitung von 20 W/m bis 8 W/m, insbesondere 14 W/m, vorgesehen sein, insbesondere bei Vorsehen zweier Heizelemente von 10 W/m bis 4 W/m, insbesondere 7 W/m, pro Litze.

Die Heizelemente könnten ferner unterschiedliche Widerstände aufweisen, so dass hierüber eine Variation der Heizleistung auch an den Leitungsverbindern möglich ist, da dort jeweils das Heizelement zum Anordnen auf dem Leitungsverbinder verwendet werden kann, das die gewünschte Heizleistung erbringt. Die Auswahl der Heizelemente kann anwendungsspezifisch somit auch bezüglich deren Widerstand erfolgen.
Sollen beide an den Enden der konfektionierten Medienleitung vorgesehenen Leitungsverbinder jeweils durch ein Heizelement außenseitig umwickelt bzw. dieses außenseitig angeordnet werden, kann bei dem einen Leitungsverbinder das erste Heizelement hierfür verwendet werden, dieses also mit einer größeren Länge aus der Medienleitung bzw. dem Leitungsverbinder herausgeschoben und zum Umwickeln des Leitungsverbinders verwendet werden, und bei dem zweiten Leitungsverbinder das zweite Heizelement. Durch eine solche optimierte Heizelementpositionierung tritt ein geringstmöglicher Verschnitt beim Ablängen der Heizelemente auf.

Ferner können unterschiedliche Heizleistungen am ersten und zweiten Leitungsverbinder vorgesehen und entsprechend einerseits eine unterschiedliche Länge desHeizelements, das zum Umwickeln des jeweiligen Leitungsverbinders vorgesehen ist, abgelängt werden. Andererseits kann auch die Dichte der Umwicklung bei den beiden Leitungsverbindern variiert und hierdurch eine unterschiedliche Heizleistung erzielt werden, wobei eine anwendungsspezifische Variation der Positionierung der Heizelemente vorgesehen werden kann.

Die Enden der Heizelemente oder Heizleiter können mit Kaltleitern elektrisch verbunden und/oder zumindest durch ein Füllelement verstärkt und mit Kaltleitern elektrisch verbunden, insbesondere gecrimpt sein. Gerade bei Verwenden von Heizwendeln aus Heizdrähten tritt das Problem auf, dass diese zum direkten Verbinden zu dünn sind, weswegen zur Verstärkung ein Füllelement verwendet werden kann, so dass eine gute Verbindung mit den Kaltleitern erfolgen kann. Als Füllelement kann beispielsweise Litzenmaterial verwendet werden, insbesondere auch von einer Kaltleiterlitze.

Die Enden der Heizelemente können ferner miteinander elektrisch verbunden und/oder durch zumindest ein Füllelement verstärkt und elektrisch miteinander verbunden, insbesondere gecrimpt, sein. Bei Verwendung von Heizwendeln aus Heizdrähten kann ein direktes Vercrimpen der Enden miteinander problematisch sein, da diese zumeist zu dünn sind, so dass sich das Vorsehen eines Füllelementes zum Vergrößern des Durchmessers eignet. Auch zumindest ein Brückenelement, das zum elektrischen Miteinanderverbinden der Heizelementenden dient, kann vorteilhaft verwendet werden. Bei Vorsehen eines solchen Brückenelements können Reihen- oder Parallelschaltungen der Heizelemente erzeugt werden. Ansonsten können die Enden der Heizelemente auch offengelassen werden, so dass sich eine Parallelschaltung der Heizelemente ergibt, oder kurzgeschlossen werden, so dass sich eine Reihenschaltung ergibt. Durch geeignete Steck- bzw. Verschaltungsvarianten können sowohl Reihen- als auch Parallelstromkreise mit den Heizelementen erzeugt werden.

Nach dem Verbinden der Enden des Brückenelementes mit den Heizelementenden kann das schlaufenförmige Brückenelement nachfolgend im Bereich des Leitungsverbinders bzw. einer vorteilhaft diesen zumindest teilweise ummantelnden Kapselung zur thermischen Isolation und/oder zum mechanischen und/oder chemischen Schutz fixiert werden. Eine solche Kapselung kann in Form eines Gehäuses, eines Schrumpfschlauchs oder auch durch Umspritzen ausgebildet werden. Bei Vorsehen eines Gehäuses als Kapselung kann eine thermische Isolation durch darin eingeschlossene Luft erzielt werden. Sofern sich herausstellt, dass das für das Verbinden bzw. Crimpen zur Verfügung stehende Material zu gering ist, um eine feste Verbindung zu schaffen, kann auch hier ein Füllelement vorgesehen und zumindest in die Verbindungsstelle eingebracht werden.

Es wird vorteilhaft die Anzahl an Crimpstellen so gering wie möglich gehalten, wobei eine Kaltleiterlitze bzw. ein Kaltleiter als Füllelement beim Crimpen von sehr dünnen Heizwendeln bzw. Heizelementen verwendet werden kann. Durch das Herausführen lediglich eines Heizelements, das zum Umwickeln bzw. zumindest teilweisen Umwickeln des oder der Leitungsverbinder verwendet wird und/oder zum anderweitigen außenseitigen Anordnen an dem Leitungsverbinder, kann eine optimale Beheizung des Leitungsverbinders insbesondere in sonst nicht beheizten Bereichen erzielt werden.

Die verbundenen Enden der Heizelemente können in der den Leitungsverbinder zumindest teilweise umgebenden Kapselung aufgenommen werden. Insbesondere kann der Leitungsverbinder in einer ersten Aufnahme der Kapselung zumindest teilweise aufgenommen werden. Die Heizelementenden können in zumindest einer zweiten Aufnahme der Kapselung angeordnet werden. Hierdurch können die untereinander bzw. mit Kaltleitern bzw. einem Brückenelement verbundenen Enden der Heizelemente gegen Beschädigung geschützt innerhalb der Kapselung, beispielsweise einer den Leitungsverbinder zumindest teilweise umgebenden Schutzkappe, aufgenommen werden.

Zum Fixieren der Position des Heizelements nach dem Umwickeln des Leitungsverbinders und insbesondere vor dem Anordnen der insbesondere gecrimpten Heizelementenden in den entsprechenden Aufnahmen der Kapselung können die Heizelemente durch zumindest ein Halteelement an dem Leitungsverbinder positionsfixiert werden, insbesondere durch hakenförmige Halteelemente und/oder ein Fixierband. Die Halteelemente dienen dabei insbesondere auch dem Zuführen der Heizelement- oder Heizleiterenden zu der zweiten Aufnahme des Isolations- und/oder Schutzgehäuses, wenn dieses den Leitungsverbinder zumindest teilweise ummantelnd an diesem angeordnet wird. Als Fixierband kann ein Klebe- oder Gewebe- oder Gewebeklebeband verwendet werden.

Als weiter vorteilhaft erweist es sich, die Heizelemente zu beschichten, insbesondere eine Korrosionsschutzbeschichtung in Form einer metallischen Beschichtung, wie einer Nickelbeschichtung, Silberbeschichtung oder einer Verzinnung, vorzusehen. Einen optimalen Schutz und eine besonders gute Wirtschaftlichkeit wird bei Vorsehen einer Nickelbeschichtung erzielt, die härter und beständiger, auch im Fertigungsprozess des Heizelements, als beispielsweise eine Verzinnung ist. Ferner können die Heizelemente eine Isolationsschicht aufweisen, insbesondere eine Fluorpolymer- bzw. FEP-Isolationsschicht, also eine Perfluorethylenpropylenschicht-Ummantelung. Durch Vorsehen einer solchen Beschichtung können Kriechströme, die durch Korrosion hervorgerufen werden können, vermieden werden. Das Vorliegen einer Fluorpolymer-Isolationsbeschichtung erweist sich ferner als vorteilhaft, da hierdurch eine besonders niedrige Permeation bei Anwesenheit von Ammoniak innerhalb der Medienleitung erzielt werden kann. Auch hierdurch können somit die Heizelemente geschützt werden.

Das Heizelement kann zumindest eine Heizwendel mit zumindest zwei Heizdrahtadersträngen umfassen. Heizelemente in Form von Heizwendeln bieten sich besonders für kurze konfektionierte Leitungen an mit einer Länge von unter 2 m. Heizwendel werden durch Vorsehen einer Innenfaser oder Seele gebildet, die von zumindest einen Draht umwickelt ist, insbesondere zwei Heizdrahtadersträngen. Bei Reihenschaltung der unterschiedlichen Heizelemente zum Beheizen der Medienleitung und der Leitungsverbinder beeinflusst eine Leitungslänge von unter 2 m die Heizleistungseinkopplung in den Leitungsverbinder. Die Heizleistung an dem Leitungsverbinder ist nicht variabel, jedoch variiert die Medienleitungslänge stark. Deshalb kann es bei kurzen Medienleitungen sinnvoll sein, die Heizdrahtlänge in der Medienleitung zu erhöhen, beispielsweise durch Anordnen in Form einer Wendel. Anstelle des Vorsehens nur einer Heizwendel können auch z.B. zwei Heizwendel verwendet werden.

Auch die einzelnen Heizwendel können beschichtet sein. Eine Heizwendel kann eine Innenfaser aus einem aromatischen Polyamid, beispielsweise Kevlar^{®} Detex 1580, umfassen, wobei diese Innenfaser einen Durchmesser von 0,4mm aufweisen kann. Je Heizwendel werden mindestens 2 Heizdrähte, insbesondere 3 bis 4 Heizdrähte bzw. Heizdrahtadern vorgesehen, wobei eine Einzelader beispielsweise einen Durchmesser von 0,14 bis 0,16 mm aufweisen kann. Der Gesamtaußendurchmesser der Heizwendel kann 0,6 bis 0,8 mm betragen.

Im Hinblick auf das Anordnen des Heizelements auf der Außenseite des Leitungsverbinders kann zum Optimieren des Heizleistungseintrags in das Innere des Leitungsverbinders und somit in das darin strömende Medium, eine Thermokamera verwendet werden. Auch andere Erfassungs- bzw. Messeinrichtungen können zur Optimierung verwendet werden.

Im Hinblick auf die Art und Weise des Crimpens der Heizelementenden erfolgt vorteilhaft eine Optimierung zwischen der Stärke der Heizelemente und dem möglichen Crimpprozess, um eine niederohmige Verbindungs- bzw. Crimpstelle zu erhalten.

Die Medienleitung kann in Form eines Rohres und/oder in Form eines Schlauchs ausgebildet werden. Insbesondere kann bei Vorsehen eines Schlauches ein Schlauch mit Aramidfasern vorgesehen werden. Bei Vorsehen eines Rohres eignet sich aufgrund des Verformens des Rohres bei gefrierendem Medium, das in diesem angeordnet ist und sich beim Gefrieren ausdehnt, insbesondere ein zumindest leicht oval extrudiertes Rohr, das radial dehnfähig ist. Die ovale Formgebung liegt in einem drucklosen Zustand bzw. unter Betriebsdruck des Mediums vor. Beim Gefrieren des Mediums tritt ein erhöhter Druck des Mediums auf. Dieser wird durch eine reversible Änderung der Querschnittsform des Rohres im Wesentlichen ohne Materialdehnung der Rohrwandung aufgenommen. Bei einem runden Querschnitt des Rohres wird bei gefrierendem Medium die Rohrwandung sofort gedehnt, wobei der Druck gegenüber der Formänderung stark ansteigt. Es kommt zu einer Dehnung des Rohres in Bezug auf dessen Durchmesser, Umfang und Querschnitt. Im Unterschied hierzu erfährt ein Rohr mit ovalem Profil bei gefrierbedingter Volumenzunahme des Mediums zunächst keine Dehnung, sondern lediglich eine Formänderung des Profils. Der Druck steigt gegenüber der Formänderung sehr viel weniger an als bei einem runden Profil. Die für die gleiche Volumenzunahme erforderliche Querschnittsfläche ist daher bei im Vergleich zu der runden Formgebung sehr viel geringerem Druck erreicht. Der Gefrierdruck ist also bei dem ovalen Profil sehr viel geringer als bei einem runden. Der Effekt kann auch bei Vorsehen eines Profils eines Rohres, das bei Betriebsdruck leicht von der Kreisform abweicht, bei Druckanstieg zunächst eine Deformation zur Kreisform erfährt und anschließend noch eine geringe Dehnung toleriert.

Weiter vorteilhaft werden die verschweißten Enden des oval extrudierten Rohres rund aufgeweitet, um mit den Leitungsverbindern endseitig optimal verbunden werden zu können. Die ovale Formgebung erfolgt, wie erwähnt, vorteilhaft durch Extrudieren und nicht durch Verformen eines ursprünglich im Querschnitt runden Rohres, um einen sogenannten Memoryeffekt zu vermeiden, der das ovale Rohr wieder in eine runde Form zurückstellen würde. Ferner kann es beim Verformen eines ursprünglich runden Rohres zu Querschnitts- bzw. Wandungsstärkenänderungen kommen, was ebenfalls unerwünscht ist.

Die Medienleitung kann ferner zumindest zwei ineinander angeordnete Medienleitungen umfassen, wobei eine innere Medienleitung innenbeheizbar ist und in dem Zwischenraum zwischen der zumindest einen inneren Medienleitung und einer äußeren Medienleitung beheizbares Medium strömbar ist oder strömt. Die Medienleitung kann also aus mehreren ineinander angeordneten Medienleitungen bestehen, wobei zumindest eine von diesen durch Heizelemente beheizbar ist und zwischen zwei Medienleitungen zu beheizendes Medium strömen kann.

Die aus dem Leitungsverbinder herausgeführten Heizelemente können einzeln abgedichtet werden oder zusammen in einer Doppeldichtung. Bei Vorsehen einer solchen Doppeldichtung können die Heizelemente außerhalb des Leitungsverbinders durch eine jeweilige Durchgangöffnung innerhalb der Doppeldichtung hindurchgeführt und danach die Doppeldichtung in eine hierfür vorgesehene Öffnung in dem Leitungsverbinder eingefügt und hierin befestigt bzw. insbesondere verrastet werden. Um die Kräfte bei der Montage der Doppeldichtung mit den darin eingefügten Heizelementen so gering wie möglich halten zu können, kann eine Beschichtung der Doppeldichtung mit einem Halogen, insbesondere Fluor, vorgesehen werden.

Das Einbringen der Heizelemente in das Innere der Medienleitung kann beispielsweise unter Zuhilfenahme eines Seiles, das an einem Torpedoelement befestigt und mittels Druckluft in die Medienleitung eingeschossen wird, erfolgen.

Zur näheren Erläuterung der Erfindung werden im Folgenden Ausführungsbeispiele von dieser näher anhand der Zeichnungen beschrieben. Diese zeigen in:
- Figur 1a, 1b: Prinzipskizzen einer erfindungsgemäßen mit innenliegenden Heizelementen versehenen Medienleitung, wobei die Heizelemente gleich lang sind (Figur 1a) oder unterschiedlich lang (Figur 1b),
- Figur 2: eine Seitenansicht einer erfindungsgemäßen mit endseitigen Leitungsverbindern versehenen Medienleitung mit innenliegenden Heizelementen, wobei die beiden Heizelemente unterschiedlich weit aus den Leitungsverbindern herausragen,
- Figur 3: eine teilweise Schnittansicht eines Teils einer erfindungsgemäßen konfektionierten Medienleitung im Bereich eines Leitungsverbinders, der außenseitig von einem Heizelement umwickelt ist,
- Figur 4: eine Seitenansicht als Prinzipskizze einer zweiten Ausführungsform einer erfindungsgemäßen konfektionierten Medienleitung,
- Figur 5: eine Prinzipskizze zweier erfindungsgemäß über ein Brückenelement miteinander verbundener Heizelemente,
- Figur 6: eine Prinzipskizze zweier erfindungsgemäß unterschiedlich langer miteinander verbundener Heizelemente, und
- Figur 7: eine teilweise Schnittansicht durch einen Leitungsverbinder mit einer zweiteiligen Medienleitung und Heizelementen, wobei eine innere und eine äußere Medienleitung ineinander angeordnet sind.

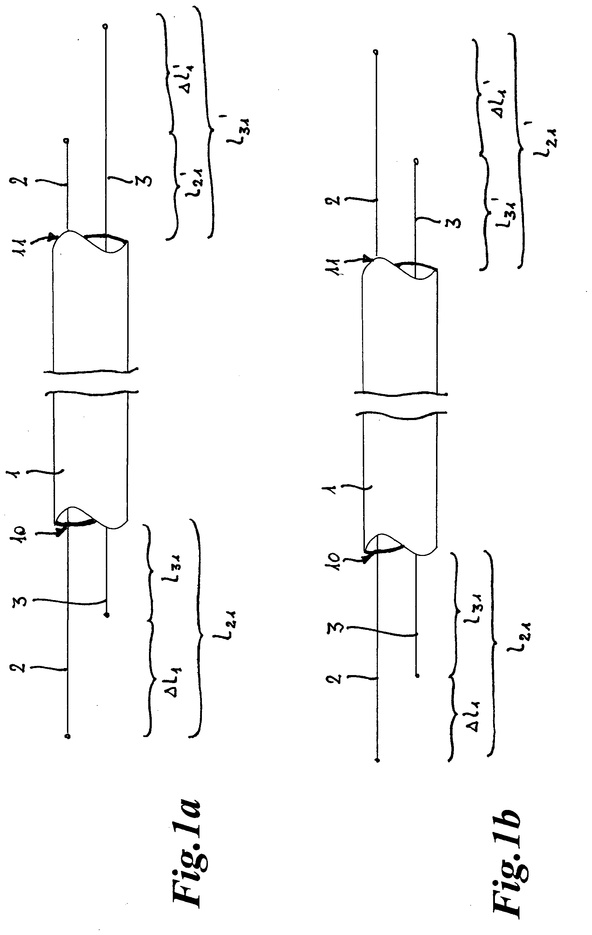

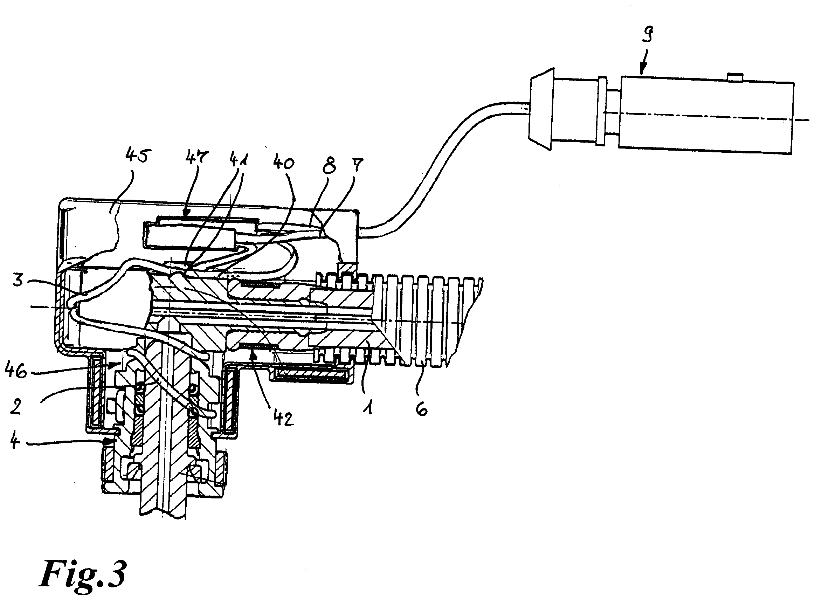

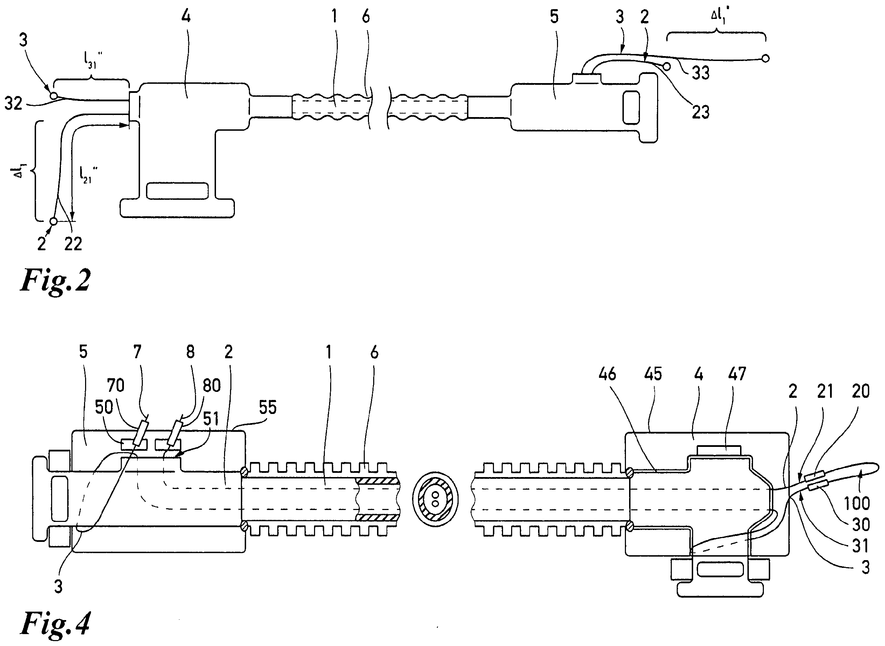

Die Figuren 1a, 1b zeigen eine Seitenansicht einer Medienleitung 1 mit innenliegenden Heizelementen 2, 3. Die Heizelemente 2, 3 werden endseitig an den beiden Enden 10, 11 aus der Medienleitung 1 in unterschiedlicher Länge l₁, l₂ herausgeführt. Um den Verschnitt möglichst gering zu halten, können die beiden Heizelemente 2, 3 etwa gleich lang ausgebildet, lediglich versetzt zueinander angeordnet werden, wie dies in Figur 1 angedeutet ist. Die Längendifferenz der jeweils überstehenden Heizelementlänge Δl wird in Abhängigkeit von der erforderlichen Wickellänge zum Umwickeln eines Leitungsverbinders, wie in den Figuren 3 und 4 gezeigt, gewählt. Die überstehende Länge des Heizelements 2 am Ende 10 der Medienleitung wird mit l₂₁ und die überstehende Länge des Heizelements 3 an diesem Ende 10 der Medienleitung mit l₃₁ bezeichnet, die Längendifferenz, wie bereits erwähnt, mit Δl₁. Da die beiden Heizelemente 2, 3 gemäß der Ausführungsform in Figur 1a etwa gleich lang ausgebildet sind, ergibt sich an dem anderen Ende 11 der Medienleitung eine entsprechende Längendifferenz Δl₁', mit Δl₁ gleich Δl₁', wobei das Heizelement 3 dort mit einer größeren Länge l₃₁' übersteht als das Heizelement 2, das mit einer Länge l₂₁' dort übersteht, wobei l₂₁ gleich I₃₁' und l₃₁ gleich I₂₁' sein kann. Bei der Ausführungsform der Medienleitung in Figur 1b weisen die beiden Heizelemente 2, 3 unterschiedliche Längen auf, wobei das Heizelement 2 deutlich länger als das Heizelement 3 ausgebildet ist. Entsprechend ragt das Heizelement 2 sowohl an dem Ende 10 als auch an dem Ende 11 der Medienleitung weiter aus der Medienleitung heraus als das Heizelement 3. Die Längendifferenz Δl₁ an dem einen Ende 10 der Medienleitung kann dabei gleich der Längendifferent Δl₁' an dem anderen Ende 11 der Medienleitung sein, kann sich jedoch von dieser auch unterscheiden. Letzterer Fall ist in Figur 1b angedeutet.

Vor dem Verbinden der Medienleitung 1 mit den beiden Leitungsverbindern 4, 5 werden auf die Medienleitung beispielsweise ein Wellrohr 6 zum äußeren Schutz und zum Isolieren sowie eine Wellrohrdichtung und beispielsweise ein Crimpring aufgebracht bzw. aufgeschoben. Die Wellrohrdichtung wird zwischen Medienleitung 1 und Wellrohr 6 eingefügt und weist insbesondere eine der Formgebung des Wellrohrs angepasste äußere Formgebung auf, kann also von innen in die Wellenberge und Wellentäler des Wellrohres eingreifen, um eine Abdichtung zu ermöglichen. Der Crimpring kann nach dem Auffügen der beiden Enden 10, 11 der Medienleitung auf entsprechende Verbindungselemente der Leitungsverbinder 4, 5, wie ein Dornprofil, aufgeschoben und nach diesem Aufdornen eine feste Verbindung zwischen Medienleitung und Leitungsverbindern durch Quetschen des Crimprings geschaffen werden. Zum Quetschen kann beispielsweise eine Kraft von 1.500 bis 2.000 N, insbesondere 1.800 N, auf die Außenseite eines solchen Crimprings aufgebracht werden, um eine feste Verbindung zwischen Medienleitung und Leitungsverbinder zu schaffen. Die Crimpverbindung kann durch Aufbringen eines Klebe- bzw. Gewebe- oder Gewebeklebebandes nach außen geschützt werden. Auch der Übergang von dieser Verbindungsstelle zu dem mit der Wellrohrdichtung versehenen Wellrohr 6 kann beispielsweise über ein Klebe-, Gewebe- oder Gewebeklebeband erfolgen.

Nach dem Verbinden der Medienleitung mit den beiden Leitungsverbindern 4, 5 können die beiden Heizelemente 2, 3 in den Leitungsverbindern 4, 5 abgedichtet werden. Dies kann durch Vorsehen bzw. Aufschieben von einzelnen Dichtelementen auf die Heizelemente oder durch Vorsehen einer Doppeldichtung, die ebenfalls auf die Heizelemente aufgeschoben wird, erfolgen. Bei einer Doppeldichtung werden beide Heizelemente durch ein Dichtungselement hindurch geführt und in einer Öffnung des Leitungsverbinders dieser gegenüber abgedichtet. Es braucht also lediglich dieses eine Dichtungselement in die vorgesehene Öffnung in dem Leitungsverbinder 4 bzw. 5 eingeschoben zu werden. Dies ist in den Figuren nicht gezeigt.

Nach dem Einfügen des oder der Dichtelemente in die Leitungsverbinder 4, 5 kann ein Ablängen und endseitiges Abisolieren der Heizelemente erfolgen. Hierdurch wird die für das Erhitzen des durch die Leitungsverbinder strömenden Mediums erforderliche Heizleistung des jeweils zum Umwickeln der Leitungsverbinder 4, 5 vorgesehenen Heizelements eingestellt. Das Ablängen ist daher ein Kalibrierschnitt. Die verbleibenden Abschnitte 22, 32 der beiden Heizelemente 2, 3 weisen nach dem Ablängen eine Länge l₂₁" bzw. l₃₁" auf, wie Figur 2 entnommen werden kann. Der Leitungsverbinder 4 kann mit dem Abschnitt 22 des Heizelements 2 umwickelt werden, der Leitungsverbinder 5 mit dem Abschnitt 33 des Heizelements 3. Die Abschnitte 32 und 23 werden jeweils nicht zum Beheizen der Leitungsverbinder 4 bzw. 5 verwendet.

Vor dem Umwickeln der beiden Leitungsverbinder 4, 5 mit den Heizelementen 2, 3 werden diese an ihren Enden 24, 34 beispielsweise mit zwei Kaltleitern 7, 8 verbunden. Dies ist in Figur 3 zu sehen.

Für das Innenbeheizen der Medienleitung 1 werden üblicherweise sehr dünne Heizelemente verwendet, was vorteilhaft beim Verbinden mit den beiden Kaltleitern 7, 8 berücksichtigt wird. Steht für eine sichere Verbindung zu wenig Material zur Verfügung, kann ein Füllelement im Bereich der Verbindungsstelle eingefügt werden.

Die Kaltleiter führen, wie in Figur 3 gezeigt, zu einem Elektrostecker 9, um einen elektrischen Anschluss der Heizelemente 2, 3 zu ermöglichen. Nach dem Verbinden der Heizelemente 2, 3 mit den Kaltleitern 7, 8 kann der überstehende Abschnitt der Heizelemente, der mit einer Länge l₂₁ aus der Medienleitung bzw. I₂₁" aus dem Leitungsverbinder 4 bzw. 5 heraus ragt, um diesen herum gewunden werden. Dies ist Figur 3 zu entnehmen. Hierbei ist ersichtlich, dass der auf Seiten des Winkel-Leitungsverbinders 4 angeordnete längere Abschnitt des Heizelements 2 um einen Teil des Leitungsverbinders 4 außen herum gewunden ist, wohingegen der kürzere Abschnitt des Heizelements 3 auf der Oberseite 40 des Leitungsverbinders 4 entlanggeführt ist. Das Heizelement 2 dient also bezüglich des winkligen Leitungsverbinders 4 zur Beheizung, wohingegen das Heizelement 3 hier nicht oder zumindest nur ganz geringfügig zum Beheizen des Leitungsverbinders 4 beiträgt.

Wie Figur 3 weiter zu entnehmen ist, wird der Leitungsverbinder 4 teilweise von einer Kapselung 45 ummantelt. Die Kapselung 45 weist hierbei zumindest eine Aufnahme 46 zum Aufnehmen des Leitungsverbinders und eine oder zwei Aufnahmen 47 zur Aufnahme der Crimpverbindungen bzw. Verbindungsstellen 70, 80 von Heizelementen und Kaltleitern auf. Die Verbindungsstellen 70, 80 werden nach dem Umwickeln des Leitungsverbinders 4 mit dem Heizelement 2 in die entsprechende Aufnahme bzw. Aufnahmen 47 der Kapselung 45 eingefügt und die beiden Kaltleiter 7, 8 aus der Kapselung 45 herausgeführt, wobei diese in den bereits genannten Elektrostecker 9 münden. Die Kapselung 45 ist vorteilhaft zwei- oder mehrschalig aufgebaut, so dass die Montage und das Herausführen der Leitungen problemlos möglich sind. Es kann z.B. zunächst eines der Schalenteile der hier als Gehäuse ausgebildeten Kapselung den Leitungsverbinder 4 zumindest teilweise umgebend angeordnet, alle herauszuführenden Leitungen aus dem Gehäuse herausgeführt, und erst nachfolgend das oder die anderen Schalenteil(e) das erste Schalenteil überdeckend mit diesen gefügt werden. Anstelle des Vorsehens eines Gehäuses kann auch ein Schrumpfschlauch oder ein Umspritzen vorgesehen werden, um einen mechanischen Schutz zu bieten.

Durch das Umwickeln des Leitungsverbinders lediglich mit einem Heizelement kann die eingebrachte Heizleistung optimal angepasst werden, so dass hier nicht mehr die im Stand der Technik bestehende Gefahr einer Überhitzung oder übermäßigen Wärmeaufbringung auf den Leitungsverbinder besteht. Der Heizleistungsbedarf im Innern des Leitungsverbinders kann beispielsweise 0,4 bis 0,8 W, insbesondere 0,6 W betragen. Hierbei können Heizelemente, wie Litzen, mit einer Heizleistung von 7 W/m verwendet werden, entsprechend bei Vorsehen zweier Litzen 8 bis 20 W/m, insbesondere 14 W/m. Diese Heizleistung wird im Bereich der Medienleitung, die zwischen den beiden Leitungsverbindern 4, 5 angeordnet ist, erzielt. Im Bereich des Leitungsverbinders 5, der in Figur 2 gezeigt ist, kann der Heizleistungsbedarf ebenfalls 0,4 bis 0,8 W, insbesondere 0,6 W, betragen. Der Heizleistungsbedarf des winkligen und des geraden Leitungsverbinders entsprechen somit einander. Anwendungsspezifisch können auch unterschiedliche Heizleistungen erzielt werden. Beispielsweise können bereits die beiden Heizelemente 2, 3 unterschiedlich ausgebildet sein, also einen unterschiedlichen Heizwiderstand aufweisen, um unterschiedliche Heizleistungen zu erzielen, so dass ein mit dem Heizelement 2 umwickelter Leitungsverbinder mit einer anderen Temperatur erhitzt werden kann als ein mit dem Heizelement 3 umwickelter Leitungsverbinder. Auch kann bei Beibehalten des Außendurchmessers und Ändern der Isolation eine Änderung der Heizleistung erzielt werden. Der Heizleistungsbedarf auf der Außenseite der Leitungsverbinder kann sowohl bei dem gewinkelten als auch dem geraden Leitungsverbinder 0,6 bis 1 W, insbesondere 0,8 W, also bei Berücksichtigung der Innen- und Außenseite gesamtheitlich 1 bis 1,8 W, insbesondere 1,4 W betragen. Das Verhältnis der Heizleistung auf der Innen- und der Außenseite des Leitungsverbinders beträgt demnach bei beiden Leitungsverbindern 0,65 bis 0,8, insbesondere 0,75. Die Litzenlänge auf der Innenseite des Leitungsverbinders kann pro Litze 20 bis 60 mm, insbesondere 40 mm betragen. Der Längenunterschied zwischen dem ersten Heizelement und dem zweiten Heizelement beträgt beispielsweise 100 bis 150 mm, insbesondere 120 mm. Das Längenverhältnis der Heizelementlängensumme zu der Längendifferenz beträgt dementsprechend insbesondere 2 : 3. Der Leitungsverbinder kann somit insbesondere mit einer Heizleistung von 0,6 W beheizt werden.

Um die Heizelemente innerhalb der Kapselung 45 so gut wie möglich gegen Verschieben zu sichern, weist, wie Figur 3 zu entnehmen ist, der Leitungsverbinder 4 auf seiner Oberseite 40 zumindest zwei hakenförmige Halteelemente 41 auf. Um einen noch besseren Halt und Sicherung gegen ungewolltes Bewegen der Heizelemente gegenüber dem Leitungsverbinder 4 vorzusehen, können die Heizelemente 2, 3 insbesondere im Bereich der Dornungsstelle 42 der Medienleitung auf dem Leitungsverbinder mittels eines Klebe-, Gewebe- oder Gewebeklebebandes ortsfest fixiert werden. Dies ist in Figur 3 jedoch nicht gezeigt.

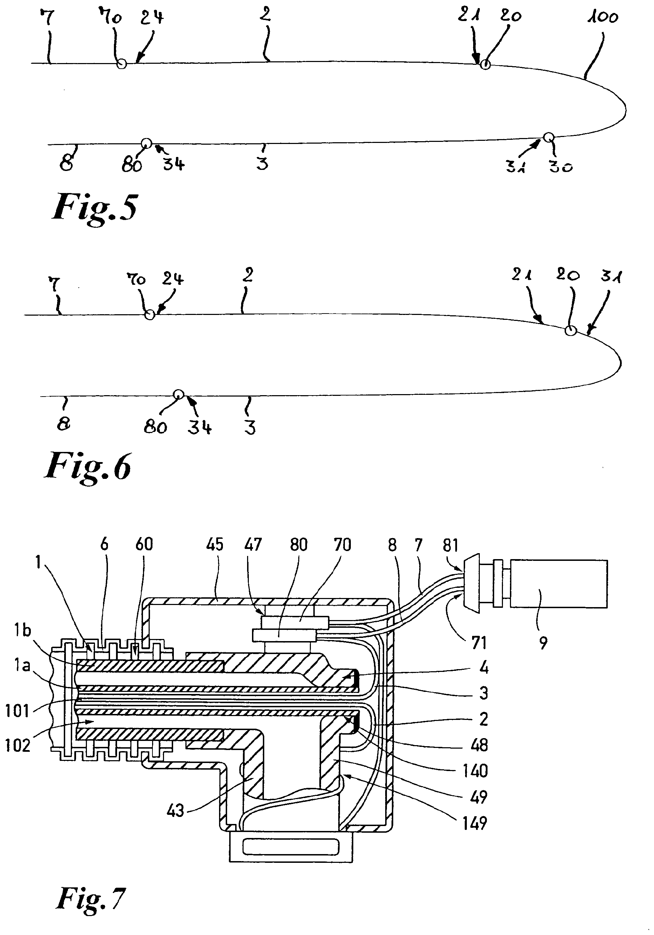

Anstelle des Verbindens der beiden Heizelemente 2, 3 mit den beiden Kaltleitern 7, 8 können, wie Figur 6 zu entnehmen ist, die beiden Heizelemente 2, 3 direkt miteinander, beispielsweise durch Crimpen, verbunden werden. Die Kaltleiter 7, 8 werden an dem jeweiligen entgegengesetzten Ende der Heizelemente 2, 3 befestigt, wie dies ebenfalls Figur 6 entnommen werden kann. Es sind z.B. eine Crimpstelle 20 zum Verbinden der beiden Heizelemente 2, 3 untereinander sowie zwei weitere Verbindungsstellen 70, 80, insbesondere Crimpstellen, zum Verbinden des Heizelements 2 mit dem Kaltleiter 7 und des Heizelements 3 mit dem Kaltleiter 8 vorgesehen. Das eine Heizelement kann länger als das andere ausgebildet werden, wie dies in Figur 6 ebenfalls zu sehen ist, wobei bei dieser Ausführungsform das Heizelement 3 zum Umwickeln des Leitungsverbinders 4 vorgesehen wird und das Heizelement 2 auf der Oberseite oder anderweitig außerhalb des Leitungsverbinders 4 zu der Crimpstelle 20 geführt wird. Die Crimpstelle 20 kann beispielsweise ebenfalls in einer Aufnahme 47 der Kapselung 45 angeordnet und darin gegen äußere Einflüsse geschützt aufgenommen werden. Sofern die beiden Heizelemente einen zu geringen Durchmesser aufweisen, können Füllelemente bzw. Einrichtungen zum Vergrößern des Durchmessers zum Schaffen einer optimalen Verbindungs- bzw. Crimpstelle hinzugenommen werden. Ein solches Füllelement kann beispielsweise eine Kaltleiterlitze sein.

Anstelle des direkten Verbindens der beiden Heizelementenden 21, 31 kann ein Brücken- oder Schlaufenelement 100 mit den beiden Heizelementenden 21, 31 verbunden werden. Dies ist in Figur 5 angedeutet. Über zwei Crimpstellen 20, 30 ist das Brückenelement 100 mit den beiden Heizelementen 2, 3 verbunden. Über die Verbindungs- bzw. Crimpstellen 70, 80 sind die beiden Kaltleiter 7, 8 mit den beiden Heizelementen 2, 3 verbunden. Das längere der beiden Heizelemente 2, 3 kann bei diesem Aufbau wiederum auf der Außenseite des Leitungsverbinders gewendelt angeordnet werden. Das jeweils kürzere Heizelement bzw. der kürzere Abschnitt des anderen Heizelements wird im Wesentlichen ohne Ausüben eines Heizeffektes auf den Leitungsverbinder bzw. das darin strömende Medium auf dessen Außen- bzw. Oberseite 40 angeordnet. Die Crimpstellen 20, 30 können in die Aufnahme oder Aufnahmen 47 in der Kapselung 45 eingefügt werden, was jedoch in Figur 5 nicht gezeigt ist. Das nicht mit in die Aufnahme 47 eingelegte Brücken- bzw. Schlaufenelement 100 wird, soweit es über die äußere Erstreckung der Kapselung 45 hinausragt, z.B. auf der Außenseite des Hüll-, insbesondere Wellrohres 6 fixiert, insbesondere mittels eines Klebe-, Gewebe- oder Gewebeklebebandes. Durch Vorsehen eines solchen Brücken- oder Schlaufenelements 100 kann eine Reihenschaltung der beiden Heizelemente 2, 3 ebenso wie eine Parallelschaltung erzeugt werden, wobei das Brückenelement für eine Parallelschaltung entweder vollständig entfernt wird, also die Enden der Heizelemente 2, 3 offen bleiben, oder das Brückenelement für eine Reihenschaltung nur einseitig von dem jeweiligen Heizelement gelöst wird.

Figur 4 zeigt eine Seitenansicht einer weiteren Ausführungsform einer erfindungsgemäßen konfektionierten Medienleitung, umfassend die beiden Leitungsverbinder 4, 5 sowie die mit innenliegenden Heizelementen 2,3 versehene Medienleitung 1 mit ummantelndem Wellrohr 6. Anstelle des Vorsehens der beiden Kaltleiter 7, 8 gemäß Figur 3 sind hier die jeweiligen Enden 21, 31 der beiden Heizelemente 2,3 mit dem Brücken- bzw. Schlaufenelement 100 versehen. Es ist also eine Ausführungsvariante des Heizelements 2,3, wie es als Prinzipskizze in Figur 5 gezeigt ist, bei der Ausführungsform gemäß Figur 4 verwendet. Hierbei ist bezüglich des Leitungsverbinders 4 das Heizelement 3 um diesen herum gewendelt, wohingegen das Heizelement 2 direkt zu der Crimpstelle 20 geführt ist. Die beiden Crimpstellen 20 ,30 können in einer jeweiligen Aufnahme 47 in der Kapselung 45 aufgenommen werden.

Der gerade Leitungsverbinder 5 ist ebenfalls mit einem der beiden Heizelemente, nämlich dem Heizelement 2, teilweise umwickelt, wobei auch hier das Heizelement 2 nicht zum Umwickeln des Leitungsverbinders 5 verwendet wird, sondern direkt mit einem Kaltleiter, nämlich dem nur teilweise dargestellten Kaltleiter 8, verbunden, insbesondere gecrimpt ist. Die jeweiligen Verbindungs- bzw. Crimpstellen 70, 80 sind in Figur 4 ebenfalls zu sehen. Diese können in Aufnahmen 50 in der Kapselung 55 aufgenommen werden, der Leitungsverbinder 5 in einer Aufnahme 51. Ein Anschluss an einen Elektrostecker, wie in der Ausführungsform nach Figur 3 gezeigt, ist bezüglich der Kaltleiter 7, 8 hier ebenfalls möglich.

Die Medienleitung 1 gemäß Figur 4 ist als ovales dehnfähiges Rohr ausgebildet, wie dem in Figur 4 ebenfalls gezeigten Querschnitt der Medienleitung zu entnehmen ist. Die ovale Formgebung wird zum Vermeiden von starkem auf die Wandung der Medienleitung einwirkendem Druck bei gefrierbedingten Volumenänderungen des Mediums innerhalb der Medienleitung gewählt. Im Unterschied zu einem runden Profil erfährt das ovale Profil eine stärkere Formänderung anstelle eines starken Druckanstiegs, so dass die für die Volumenzunahme des gefrierenden Mediums erforderliche Querschnittsfläche bei einem im Vergleich zum runden Profil sehr viel geringeren Druck erreicht wird. Die mit den beiden Leitungsverbindern 4, 5 verbundenen Enden 10 ,11 der Medienleitung sind rund aufgeweitet, um an den Leitungsverbindern aufgedornt werden zu können. Die ovale Formgebung wird bereits beim Extrudieren des Rohres geschaffen, da sie sich andernfalls beim Umformen eines ursprünglich runden Rohres aufgrund des wirkenden Memoryeffekts in eine runde Form rückstellen könnte bzw. würde. Alternativ zu der Verwendung eines Rohres als Medienleitung kann auch ein Schlauch verwendet werden, insbesondere ein Schlauch mit im Mantel vorgesehenen Verstärkungseinlagen, insbesondere Aramidfasern.

Die Heizelemente können zum Schutz vor Korrosion mit einer Beschichtung, beispielsweise einer Nickelbeschichtung, versehen sein. Ferner kann eine Isolationsbeschichtung aus Fluorpolymer bzw. FEP, also Perfluorethylenpropylen, das im Hinblick auf Ammoniak die niedrigste Permeationsgefahr aufweist, als äußere Ummantelung der Heizelemente vorgesehen werden. Die einzelnen Wendel der Heizleiter bzw. Heizelemente sind vorteilhaft ebenfalls beschichtet und weisen eine Innenfaser z.B. aus Aramid, insbesondere Kevlar^{®} Detex 1580, z.B. mit einem Durchmesser mit 0,4 mm, auf. Diese Innenfaser umgebend können zwei, drei oder auch vier Drähte oder Einzeladern mit einem jeweiligen Durchmesser von beispielsweise 0,14 bis 0,16 mm, gewendelt angeordnet werden. Der Gesamtaußendurchmesser der Heizwendel beträgt beispielsweise 0,6 bis 0,8 mm. Der Crimpprozess wird zum Schaffen einer niederohmigen Verbindungs- bzw. Crimpstelle 70, 80 durch Anpassen des Crimpprozesses an die jeweilige Drahtstärke optimal angepasst. Durch das Vorsehen von Heizwendeln der Heizleiter bzw. Heizelemente können hohe Widerstände erzeugt werden zum Optimieren der Heizleistung.

Neben einer Wärmeleitfähigkeit des Leitungsverbinders kann es im Heißbereich der konfektionierten beheizbaren Medienleitung, also in dem Bereich, in dem diese in der Nähe stark Wärme abgebender Einrichtungen, wie einem Abgasstrang bzw. einem Motor, angeordnet ist, im Unterschied zu dem Kaltbereich, der selbst wenig oder keine Wärme abgibt, so dass ein Beheizen dieses Bereichs der konfektionierten Medienleitung erforderlich ist, auch auf eine besondere Temperaturfestigkeit ankommen. Vorteilhaft kann für den im Heißbereich angeordneten Leitungsverbinder ein im Vergleich zu dem für den Leitungsverbinder im Kaltbereich verwendeten Material temperaturbeständigeres Material verwendet werden, beispielsweise ein temperaturbeständiges Polymer, wie PPA (Polyphthalamid). Als weiter vorteilhaft erweist es sich, wenn auch die Medienleitung im Heißbereich aus einem temperaturbeständigeren Material besteht. Hierbei eignet sich das Vorsehen einer zweigeteilten Leitung. Der eine Leitungsverbinder bzw. Quick Connector im Heißbereich und der Teil der Medienleitung dort können somit z.B. aus PPA bestehen und die restliche im Kaltbereich angeordnete Medienleitung ebenso wie der Leitungsverbinder dort, der als Steckverbinder ausgebildet sein kann, aus einem weniger temperaturbeständigen Material, wie z.B. aus Polyamid 12. Der Leitungsverbinder kann dort auch z.B. aus PA12 GF30 bestehen, also einem Polyamid 12 mit 30 Gew.% Glasfaser, oder einem Polyamid 6. Bei Verwendung einer schlauchförmigen Medienleitung kann dieser im Heißbereich aus EPDM (Ethylen-Propylen-Dien-Monomer) bestehen, in Kombination mit einem Leitungsverbinder aus PPA.

Der aus einem temperaturbeständigen Material, wie PPA, bestehende Teil der Medienleitung kann z.B. von einem Gewebetape umwickelt sein und einem Hüll- oder Wellrohr aus temperaturbeständigem TPC (Thermoplastischen Polyesterelastomer) aufgenommen sein. Eine Crimpverbindung im Heißbereich besteht z.B. aus der Legierung K-75 und ein Schrumpfschlauch aus FEP (Perfluorethylenpropylen). Die übrige Medienleitung (im Kaltbereich) aus PA 12 kann mit einem Standardtape umwickelt und von einem Hüll- bzw. Wellrohr aus modifiziertem Polypropylen umgeben sein. Die Crimpverbindung in diesem Kaltbereich kann aus CuZn30 und ein Schrumpfschlauch aus XPE (strahlenvernetzes Polyethylen) bestehen.

PPA eignet sich besonders für höhere Temperaturen und weist ein sehr gutes Permeationsverhalten auf, ist also kaum durchlässig auch für aggressive durch die beheizbare konfektionierte Medienleitung strömende Medium.

In Figur 7 ist eine weitere Ausführungsform der Medienleitung 1 und des an dieser angefügten Leitungsverbinders 4 in Form eines Winkelverbinders gezeigt. Die Medienleitung 1 umfasst hier zwei ineinander angeordnete Medienleitungen, eine innere Medienleitung 1a und eine äußere Medienleitung 1b. Die innere Medienleitung 1a weist in ihrem inneren Lumen 101 die beiden Heizelemente 2, 3 auf, ist also hierüber innenbeheizbar. Durch den Zwischenraum 102 zwischen der inneren Medienleitung 1a und der äußeren Medienleitung 1b kann zu beheizendes Medium strömen. Die äußere Medienleitung 1b ist mit dem Leitungsverbinder 4 gefügt. Die innere Medienleitung 1a ist durch eine Öffnung 48 in der Wandung 49 des Leitungsverbinders 4 herausgeführt. Um die Durchtrittsstelle durch die Wandung 49 nach außen abzudichten, um zu verhindern, dass Medium dort aus dem Zwischenraum 102 nach außen dringt, ist ein Verschlusselement 140 dort auf der Außenseite 149 der Wandung 49 angeordnet. Außenseitig die äußere Medienleitung 1b außerhalb des Leitungsverbinders 4 umgebend ist das Hüll- oder Wellrohr 6 angeordnet, unter Belassen des isolierenden Luftspalts 60 zwischen der äußeren Medienleitung 1b und dem Hüllrohr 6. Zur weiteren Isolation auch des Leitungsverbinders 4 ist diesen und ein Ende des Hüllrohres 6 umgebend die außenseitige Isolations- oder Schutzkappe 45 vorgesehen.

Die beiden durch die innere Medienleitung 1a geführten Heizelemente 2, 3 sind endseitig aus dieser herausgeführt. Das kürzer über die Außenseite 149 der Wandung 49 verstehende Heizelement 2 oder 3 ist an einer Verbindungsstelle 80 mit dem Kaltleiter 8 verbunden, beispielsweise durch eine Crimpverbindung. Zusätzlich kann die Verbindung durch einen Schrumpfschlauch oder einen Verguss abgedichtet werden. Das weiter über die Außenseite 149 der Wandung 49 vorstehende Heizelement 2, 3 ist zunächst um den abgewinkelten Anschlussstutzen 43 außenseitig herum gewunden und nachfolgend zu einer Verbindungsstelle 70 zum Verbinden mit dem Kaltleiter 7 geführt. Auch diese Verbindung kann eine Crimpverbindung sein, die zusätzlich durch einen Schrumpfschlauch und/oder ein Vergussmaterial nach außen abgedichtet wird. Beide Verbindungsstellen 70, 80 sind innerhalb der Schutzkappe 45 angeordnet, insbesondere in der dafür vorgesehenen Aufnahme 47 aufgenommen. Beide Kaltleiter 7, 8 sind an ihren den Verbindungsstellen 70, 80 gegenüberliegenden Enden 71, 81 mit dem Stecker 9 versehen, der dem Anschluss an eine elektrische Energieversorgung dient.

### Bezugszeichenliste

- 1: Medienleitung
- 1a: innere Medienleitung
- 1b: äußere Medienleitung
- 2: erstes Heizelement
- 3: zweites Heizelement
- 4: Leitungsverbinder, abgewinkelt
- 5: Leitungsverbinder, gerade
- 6: Wellrohr/Hüllrohr
- 7: Kaltleiter
- 8: Kaltleiter
- 9: Elektrostecker
- 10: erstes Ende der Medienleitung
- 11: zweites Ende der Medienleitung
- 20: Verbindungs-/Crimpstelle
- 21: Heizelementende
- 22: Abschnitt
- 23: Abschnitt
- 24: Heizelementende
- 30: Verbindungs-/Crimpstelle
- 31: Heizelementende
- 32: Abschnitt
- 33: Abschnitt
- 34: Heizelementende
- 40: Oberseite
- 41: hakenförmiges Halteelement
- 42: Dornungsstelle
- 43: abgewinkelter Abschlussstutzen
- 45: Kapselung
- 46: Aufnahme
- 47: Aufnahme
- 48: Öffnung
- 49: Wandung
- 50: Aufnahme
- 51: Aufnahme
- 55: Kapselung
- 60: Luftspalt
- 70: Verbindungs-/Crimpstelle
- 71: Ende
- 80: Verbindungs-/Crimpstelle
- 81: Ende
- 100: Brücken- bzw. Schlaufenelement
- 101: inneres Lumen von 1a
- 102: Zwischenraum
- 140: Verschlusselement
- 149: Außenseite
- Δl: Längendifferenz
- Δl': Längendifferenz
- l₂₁: Länge des überstehenden Abschnitts des Heizelements 2 am Ende 10 der Medienleitung
- l₃₁: Länge des überstehenden Abschnitts des Heizelements 3 am Ende 10 der Medienleitung
- l₂₁': Länge des überstehenden Abschnitts des Heizelements 2 am Ende 11 der Medienleitung
- l₃₁': Länge des überstehenden Abschnitts des Heizelements 3 am Ende 11 der Medienleitung
- l₂₁": Länge des überstehenden Abschnitts des Heizelements 2, bezüglich des Leitungsverbinders 4
- l₃₁": Länge des überstehenden Abschnitts des Heizelements 3, bezüglich des Leitungsverbinders 4

## Patentansprüche

1. Verfahren zum Konfektionieren einer Medienleitung (1,1a,1b) mit innenliegenden Heizelementen (2,3),
**dadurch gekennzeichnet, dass**
- die Heizelemente (2,3) in die Medienleitung (1,1a) eingezogen werden,
- die Medienleitung (1,1a,1b) an einem Leitungsverbinder (4,5) montiert wird,
- zumindest ein Dichtelement zum Abdichten der Heizelemente (2,3) gegenüber dem Leitungsverbinder (4,5) auf diese aufgeschoben und an dem Leitungsverbinder (4,5) montiert wird,
- bei Vorsehen von gleich langen Heizelementen (2,3) diese am Ende (10,11) der Medienleitung (1,1a,1b) so positioniert werden, dass jeweils eines der Heizelemente (2,3) weiter aus der Medienleitung herausragt als das zumindest eine andere oder eines der Heizelemente (2,3) mit einer größeren Länge (l₂₁,l₂₁',l₃₁,l₃₁') abgelängt wird als das oder die andere(n),
- um einen Leitungsverbinder (4,5) jeweils nur eines der Heizelemente (2,3) auf der Außenseite zumindest teilweise herum gewunden oder angeordnet wird, und
- die Heizelemente (2,3) offen gelassen oder elektrisch miteinander und/oder mit Kaltleitern (7,8) und/oder mit einem Brückenelement (100) und/oder Füllelement verbunden oder parallel geschaltet werden.

2. Verfahren nach Anspruch 1,
**dadurch gekennzeichnet, dass**
die Heizelemente (2,3) durch zumindest ein Halteelement (41) an dem Leitungsverbinder (4,5) positionsfixiert werden, insbesondere durch hakenförmige Halteelemente (41) und/oder ein Fixierband, insbesondere ein Klebe- oder Gewebe- oder Gewebeklebeband.

3. Verfahren nach Anspruch 1 oder 2,
**dadurch gekennzeichnet, dass**
der Leitungsverbinder (4,5) in einer ersten Aufnahme (46) einer Kapselung (45) zur thermischen Isolation und/oder zum mechanischen und/oder chemischen Schutz zumindest teilweise aufgenommen wird.

4. Konfektionierte Medienleitung mit einer Medienleitung (1,1a,1b) mit innenliegenden Heizelementen (2,3), wobei die Heizelemente (2,3) in die Medienleitung (1,1a) eingezogen sind, und mit zumindest einem Leitungsverbinder (4,5),
**dadurch gekennzeichnet, dass**
zum Beheizen des Leitungsverbinders (4,5) nur eines der innenliegenden und aus der Medienleitung (1,1a) und dem Leitungsverbinder (4,5) herausgeführten Heizelemente (2,3) den Leitungsverbinder (4,5) auf der Außenseite zumindest teilweise umgebend um diesen herum angeordnet ist.

5. Konfektionierte Medienleitung nach Anspruch 4,
**dadurch gekennzeichnet, dass**
die Abschnitte (22,32,23,33) der Heizelemente (2,3), die über die Endfläche des Leitungsverbinders (4,5) vorstehen, eine unterschiedliche Länge (l₂₁", l₃₁") aufweisen.

6. Konfektionierte Medienleitung nach Anspruch 4,
**dadurch gekennzeichnet, dass**
die zumindest zwei innerhalb der Medienleitung (1,1a,1b) angeordneten Heizelemente (2,3) eine unterschiedliche Länge aufweisen.

7. Konfektionierte Medienleitung nach Anspruch 4, 5 oder 6,
**dadurch gekennzeichnet, dass**
die Enden (21,31) der Heizelemente (2,3) mit Kaltleitern (7,8) elektrisch verbunden und/oder durch zumindest ein Füllelement verstärkt und mit Kaltleitern elektrisch verbunden sind, insbesondere gecrimpt sind.

8. Konfektionierte Medienleitung nach einem der Ansprüche 4 bis 7,
**dadurch gekennzeichnet, dass**
die Enden (21,31) der Heizelemente (2,3) miteinander elektrisch verbunden und/oder durch zumindest ein Füllelement verstärkt und miteinander elektrisch verbunden, insbesondere gecrimpt, sind.

9. Konfektionierte Medienleitung nach einem der Ansprüche 4 bis 8,
**dadurch gekennzeichnet, dass**
die Enden (21,31) der Heizelemente (2,3) durch zumindest ein Brückenelement (100) elektrisch miteinander verbunden und/oder durch zumindest ein Füllelement verstärkt und durch zumindest ein Brückenelement elektrisch miteinander verbunden, insbesondere gecrimpt, sind.

10. Konfektionierte Medienleitung nach einem der einem der Ansprüche 4 bis 9,
**dadurch gekennzeichnet, dass**
die Enden (21,31,24,34) der Heizelemente (2,3) und/oder Verbindungs- oder Crimpstellen (20,30,70,80) in einer den Leitungsverbinder (4,5) zumindest teilweise umgebenden Kapselung (45,55) aufgenommen sind.

11. Konfektionierte Medienleitung nach einem der Ansprüche 5 bis 10,
**dadurch gekennzeichnet, dass**
die Heizelemente (2,3) beschichtet sind, insbesondere eine Korrosionsschutzbeschichtung in Form einer metallischen Beschichtung, insbesondere einer Nickelbeschichtung oder einer Verzinnung, aufweisen, und/oder dass die Heizelemente (2,3) eine Isolationsschicht aufweisen, insbesondere eine Fluorpolymer- bzw. FEP-Isolationsschicht.

12. Konfektionierte Medienleitung nach einem der Ansprüche 4 bis 11,
**dadurch gekennzeichnet, dass**
das Heizelement (2,3) zumindest eine Heizwendel mit zumindest zwei Heizdrahtadersträngen umfasst.

13. Konfektionierte Medienleitung nach Anspruch 12,
**dadurch gekennzeichnet, dass**
die Heizwendel beschichtet ist, insbesondere eine Korrosionsschutzbeschichtung in Form einer metallischen Beschichtung, insbesondere einer Nickelbeschichtung oder einer Verzinnung, aufweist, und/oder dass die Heizwendel eine Isolationsschicht aufweist, insbesondere eine Fluorpolymer- bzw. FEP-Isolationsschicht.

14. Konfektionierte Medienleitung nach einem der Ansprüche 4 bis 13,
**dadurch gekennzeichnet, dass**
die Heizelemente (2,3) einen unterschiedlichen Widerstand aufweisen.

15. Konfektionierte Medienleitung nach einem der Ansprüche 4 bis 14,
**dadurch gekennzeichnet, dass**
die Medienleitung zumindest zwei ineinander angeordnete Medienleitungen (1a,1b) umfasst, wobei eine innere Medienleitung (1a) innenbeheizbar ist und in einem Zwischenraum (102) zwischen der zumindest einen inneren Medienleitung (1a) und einer äußeren Medienleitung (1b) beheizbares Medium strömbar ist oder strömt.

## Claims

1. Method for assembling a media conduit (1, 1a, 1b) with internal heating elements (2, 3),
**characterised in that**
- the heating elements (2, 3) are drawn into the media conduit (1, 1a),
- the media conduit (1, 1a, 1b) is mounted on a conduit connector (4, 5),
- at least one sealing element for sealing the heating elements (2, 3) in relation to the conduit connector (4, 5) is pushed onto said heating elements and mounted on the conduit connector (4, 5),
- in the case where equally long heating elements (2, 3) are provided, the latter are positioned at the end (10, 11) of the media conduit (1, 1a, 1b) in such a way that in each instance one of the heating elements (2, 3) projects further out of the media conduit than the at least one other, or one of the heating elements (2, 3) is cut to a greater length (l₂₁, l₂₁', l₃₁, l₃₁') than the other(s),
- in each instance only one of the heating elements (2, 3) is at least partially wound or arranged around a conduit connector (4, 5) on the outside, and
- the heating elements (2, 3) are left open or are electrically connected to one another and/or to PTC thermistors (7, 8) and/or to a bridge element (100) and/or filling element or are connected in parallel therewith.

2. Method according to claim 1,
**characterised in that**
the heating elements (2, 3) are positionally fixed to the conduit connector (4, 5) by at least one holding element (41), in particular by hook-shaped holding elements (41) and/or by a fixing tape, in particular an adhesive tape or fabric tape or fabric adhesive tape.

3. Method according to claim 1 or 2,
**characterised in that**
the conduit connector (4, 5) is at least partially received in a first receptacle (46) of an enclosure (45) for thermal insulation and/or for mechanical and/or chemical protection.

4. Assembled media conduit with a media conduit (1, 1a, 1b) with internal heating elements (2, 3), wherein the heating elements (2, 3) have been drawn into the media conduit (1, 1a), and with at least one conduit connector (4, 5),
**characterised in that**
for the purpose of heating the conduit connector (4, 5), only one of the internal heating elements (2, 3) guided out of the media conduit (1, 1a) and out of the conduit connector (4, 5) is arranged around the conduit connector (4, 5) on the outside at least partially surrounding it.

5. Assembled media conduit according to claim 4,
**characterised in that**
the sections (22, 32, 23, 33) of the heating elements (2, 3) that protrude beyond the end face of the conduit connector (4, 5) have different lengths (l₂₁", l₃₁").

6. Assembled media conduit according to claim 4,
**characterised in that**
the at least two heating elements (2, 3) arranged within the media conduit (1, 1a, 1b) have different lengths.

7. Assembled media conduit according to claim 4, 5 or 6,
**characterised in that**
the ends (21, 31) of the heating elements (2, 3) are electrically connected to PTC thermistors (7, 8) and/or are reinforced by at least one filling element and electrically connected, in particular crimped, to PTC thermistors.

8. Assembled media conduit according to one of claims 4 to 7,
**characterised in that**
the ends (21, 31) of the heating elements (2, 3) are electrically connected to one another and/or are reinforced by at least one filling element and electrically connected, in particular crimped, to one another.

9. Assembled media conduit according to one of claims 4 to 8,
**characterised in that**
the ends (21, 31) of the heating elements (2, 3) are electrically connected to one another by at least one bridge element (100) and/or are reinforced by at least one filling element and electrically connected, in particular crimped, to one another by at least one bridge element.

10. Assembled media conduit according to one of claims 4 to 9,
**characterised in that**
the ends (21, 31, 24, 34) of the heating elements (2, 3) and/or connecting points or crimping points (20, 30, 70, 80) are received in an enclosure (45, 55) at least partially surrounding the conduit connector (4, 5).

11. Assembled media conduit according to one of claims 5 to 10,
**characterised in that**
the heating elements (2, 3) are coated, in particular exhibit an anti-corrosion coating in the form of a metallic coating, in particular a nickel coating or a tin plating,
and/or **in that** the heating elements (2, 3) exhibit an insulating layer, in particular a fluoropolymer insulating layer or FEP insulating layer.

12. Assembled media conduit according to one of claims 4 to 11,
**characterised in that**
the heating element (2, 3) comprises at least one heating coil with at least two heating-wire core strands.

13. Assembled media conduit according to claim 12,
**characterised in that**
the heating coil is coated, in particular exhibits an anti-corrosion coating in the form of a metallic coating, in particular a nickel coating or a tin plating, and/or **in that** the heating coil exhibits an insulating layer, in particular a fluoropolymer insulating layer or FEP insulating layer.

14. Assembled media conduit according to one of claims 4 to 13,
**characterised in that**
the heating elements (2, 3) have different resistances.

15. Assembled media conduit according to one of claims 4 to 14,
**characterised in that**
the media conduit comprises at least two media conduits (1a, 1b) arranged one inside the other, wherein an inner media conduit (1a) is capable of being heated on the inside and heatable medium is able to flow or flows in an intermediate space (102) between the at least one inner media conduit (1a) and an outer media conduit (1b).

## Revendications

1. Procédé de confection d'une conduite de fluide (1, 1a, 1b) avec des éléments de chauffe intérieurs (2, 3),
**caractérisé en ce que**
- les éléments de chauffe (2, 3) sont intégrés dans la conduite de fluide (1, 1a),
- la conduite de fluide (1, 1a, 1b) est montée au niveau d'un connecteur de conduite (4, 5),
- au moins un élément étanche est enfilé pour rendre étanche leséléments de chauffe (2, 3) par rapport au connecteur de conduite (4, 5) sur celle-ci et est monté au niveau du connecteur de conduite (4, 5),
- lors de la prévoyance d'éléments de chauffe (2, 3) de même longueur ceux-ci sont positionnés à l'extrémité (10, 11) de la conduite de fluide (1, 1a, 1b) de sorte que respectivement un des éléments de chauffe (2, 3) dépasse plus de la conduite de fluide que le au moins un autre ou un des éléments de chauffe (2, 3) n'est coupé à une longueur plus grande (l₂₁, l_{21'}, l₃₁, l_{31'}) que le ou les autre(s),
- respectivement seul un des éléments de chauffe (2, 3) est enroulé ou agencé autour d'un connecteur de conduite (4, 5) sur le côté extérieur au moins partiellement, et
- les éléments de chauffe (2, 3) sont laissés ouverts ou reliés électriquement entre eux et/ou à des résistances CTP (7, 8) et/ou à un élément de pont (100) et/ou un élément de remplissage ou sont montés parallèlement.

2. Procédé selon la revendication 1,
**caractérisé en ce que**
les éléments de chauffe (2, 3) sont fixés en position par au moins un élément de retenue (41) au niveau du connecteur de conduite (4, 5), en particulier par des éléments de retenue (41) en forme de crochet et/ou une bande de fixation, en particulier un ruban adhésif ou tissé ou adhésif tissé.

3. Procédé selon la revendication 1 ou 2,
**caractérisé en ce que**
le connecteur de conduite (4, 5) est reçu au moins partiellement dans un premier logement (46) d'un encapsulage (45) pour l'isolation thermique et/ou pour la protection mécanique et/ou chimique.

4. Conduite de fluide confectionnée avec une conduite de fluide (1, 1a, 1b) avec des éléments de chauffe intérieurs (2, 3), dans laquelle les éléments de chauffe (2,3)sont intégrés dans la conduite de fluide (1, 1a), et avec au moins un connecteur de conduite (4, 5),
**caractérisée en ce que**
pour le chauffage du connecteur de conduite (4, 5) seul un des éléments de chauffe (2, 3) situés à l'intérieur et sortant de la conduite de fluide (1, 1a) et du connecteur de conduite (4, 5) est agencé en entourant au moins partiellement le connecteur de conduite (4, 5) sur le côté extérieur de celui-ci.

5. Conduite de fluide confectionnée selon la revendication 4,
**caractérisée en ce que**
les sections (22, 32, 23, 33) des éléments de chauffe (2, 3) qui dépassent de la surface d'extrémité du connecteur de conduite (4, 5), présentent une longueur différente (l_{21"}, l_{31"}).

6. Conduite de fluide confectionnée selon la revendication 4,
**caractérisée en ce que**
les au moins deux éléments de chauffe (2, 3) agencés à l'intérieur de la conduite de fluide (1, 1a, 1b) présentent une longueur différente.

7. Conduite de fluide confectionnée selon la revendication 4, 5 ou 6,
**caractérisée en ce que**
les extrémités (21, 31) des éléments de chauffe (2, 3) sont reliées électriquement aux résistances PCT et/ou renforcées par au moins un élément de remplissage et sont reliées électriquement aux résistances CTP (7,8), sont en particulier serties.

8. Conduite de fluide confectionnée selon l'une des revendications 4 à 7,
**caractérisée en ce que**
les extrémités (21, 31) des éléments de chauffe (2, 3) sont reliées électriquement entre elles et/ou par au moins un élément de renforcement et reliées électriquement entre elles, en particulier serties.

9. Conduite de fluide confectionnée selon l'une des revendications 4 à 8,
**caractérisée en ce que**
les extrémités (21, 31) des éléments de chauffe (2, 3) sont reliées électriquement entre elles et/ou par au moins un élément de pont (100) et/ou par au moins un élément de remplissage et sont reliées électriquement entre elles par au moins un élément de pont, en particulier serties.

10. Conduite de fluide confectionnée selon l'une des revendications 4 à 9,
**caractérisée en ce que**
les extrémités (21, 31, 24, 34) des éléments de chauffe (2, 3) et/ou points de liaison ou de sertissage (20, 30, 70, 80) sont reçues dans un encapsulage (45, 55) entourant au moins partiellement le connecteur de conduite (4, 5).

11. Conduite de fluide confectionnée selon l'une des revendications 5 à 10,
**caractérisée en ce que**
les éléments de chauffe (2, 3) sont revêtus afin de présenter en particulier un revêtement de protection contre la corrosion sous la forme d'un revêtement métallique, en particulier d'un revêtement de nickel ou d'un étamage, et/ou que les éléments de chauffe (2, 3) présentent une couche d'isolation, en particulier une couche d'isolation de fluoropolymère ou FEP.

12. Conduite de fluide confectionnée selon l'une des revendications 4 à 11,
**caractérisée en ce que**
l'élément de chauffe (2, 3) comprend au moins un filament chauffant avec au moins deux brins d'âme de fil de chauffage.

13. Conduite de fluide confectionnée selon la revendication 12,
**caractérisée en ce que**
le filament chauffant est revêtu, en particulier présente un revêtement de protection contre la corrosion sous la forme d'un revêtement métallique, en particulier d'un revêtement de nickel ou d'un étamage, et/ou que le filament chauffant présente une couche d'isolation, en particulier une couche d'isolation de fluoropolymère ou de FEP.

14. Conduite de fluide confectionnée selon l'une des revendications 4 à 13,
**caractérisée en ce que**
les éléments de chauffe (2, 3) présentent une résistance différente.

15. Conduite de fluide confectionnée selon l'une des revendications 4 à 14,
**caractérisée en ce que**
la conduite de fluide comprend au moins deux conduites de fluide (1a, 1b) agencées l'une dans l'autre, dans laquelle une conduite de fluide intérieure (1a) est chauffable à l'intérieur et peut s'écouler ou s'écoule dans un espace intermédiaire (102) entre l'au moins une conduite de fluideintérieure (1a) et une conduite de fluideextérieure (1b).
